# FASCICULE DE BREVET EUROPEEN

(11) **EP 4 112 180 B1**
(45) Date de publication et mention de la délivrance du brevet: **14.02.2024**
(21) Numéro de dépôt: 22181289.4
(22) Date de dépôt: 27.06.2022
(51) Int. Cl.: B02C 17/00, B02C 17/14, B02C 23/14, B07B 1/06, B09B 3/30, B02C 17/18

(54) **PROCÉDÉ DE TRAITEMENT DE DÉCHETS DE BOIS DE CLASSE B**
VERFAHREN ZUR BEHANDLUNG VON HOLZABFÄLLEN DER KLASSE B
METHOD FOR PROCESSING CLASS B WOOD WASTE

(30) Priorité: 30.06.2021 FR 2107082
(43) Date de publication de la demande: 04.01.2023
(73) Titulaire: Commissariat à l'énergie atomique et aux énergies alternatives, 75015 Paris (FR)
(72) Inventeur: Demey Cedeno, Hary, 38054 Grenoble (FR); Bedel, Laurent, 38054 Grenoble (FR)
(74) Mandataire: Cabinet Nony

(56) Documents cités:
- FR-A1- 3 075 074
- JP-A- 2008 093 590
- US-A1- 2005 205 700

## Description

La présente invention concerne le domaine de la valorisation de déchets de bois de classe B. Elle vise à permettre après un traitement spécifique l'utilisation de déchets de bois B en tant que combustible solide pour une installation de chauffage industriel, ainsi qu'en tant que matière première pour la fabrication de meubles, pour la fabrication d'agents réducteurs pour des hauts fourneaux métallurgiques ou pour la production de catalyseur.

La biomasse de bois possède une densité et un pouvoir calorifique élevé adaptés à une valorisation énergétique. Cependant, la quantité de bois naturel est limitée et localisée aux zones forestières. En outre, la filière de valorisation de la biomasse de bois est concurrencée par la filière de production de pâte à papier et par la filière de la construction.

Pour surmonter les difficultés d'approvisionnement en bois, la valorisation des déchets issus de l'ameublement, de la construction ou de l'industrie, en tant que biomasse apparait comme une alternative prometteuse.

En France, les déchets de bois sont classés en trois classes.

La classe A regroupe l'ensemble des déchets de bois qui n'a pas fait l'objet d'un traitement autre que mécanique. Elle regroupe la plupart des résidus forestiers, le bois d'emballage, les palettes. Le bois de classe A est propre et peut être utilisé tel quel en chaufferie, comme cela est prescrit dans la norme DEVP1405250A édictée par l'Arrêté du 24 juillet 2014.

La classe B regroupe les déchets de bois traité en surface par des peintures, des vernis ou des résines de conservation. Elle comporte notamment le bois massif traité en surface, le bois aggloméré, en particulier le bois mélaminé et laqué, le contreplaqué, et le faux bois aussi connu sous l'appellation commune MDF (acronyme anglais de « Medium Density Fiber »). Les déchets de bois de classe B proviennent notamment de meubles usagés et de bois de charpente.

La classe C regroupe les déchets de bois traité chimiquement à coeur, généralement sous pression dans un autoclave. Les déchets de bois de classe C comportent des teneurs élevées en polluants qui nécessitent un traitement spécifique, par exemple dans un centre d'incinération ou par thermolyse à haute température, par exemple entre 300°C et 1000 °C comme cela est par exemple décrit dans US 2019/0367814 A1. Les déchets de bois de classe C comportent en particulier les traverses de chemin de fer traitées à la créosote, les poteaux électriques, les structures extérieures en bois telles des palissades traitées à coeur avec des sels hydrosolubles, et des tours de refroidissement industrielles.

La valorisation, aussi bien en tant que combustible énergétique qu'en tant que matière première recyclée, est une solution prometteuse pour réduire la quantité déchets de bois de classe B.

Toutefois, les déchets de classe B comportent des polluants qui proviennent de la formulation des peintures, des additifs, des colles et des adjuvants utilisés pour le traitement du bois brut. Les teneurs en polluant sont supérieures aux exigences de la norme DEVP1405250A si bien que la combustion des déchets de classe B dans les chaudières à combustion est impossible sans un traitement spécifique de dépollution. Ces teneurs sont en outre non conformes aux exigences de la norme EU 2009/894/EC qui définit les teneurs maximales admissibles en polluants, plus élevées que dans la norme DEVP1405250A, pour qu'un bois recyclé puisse être destiné à la fabrication de matériaux à base de bois.

Il est connu de FR 3 075 074 A1 un procédé de traitement mécanique de déchets de bois de classe B qui comporte le broyage de déchets de bois B au moyen d'un broyeur à couteaux afin de concentrer les polluants dans les fines et pour que la taille des particules broyées soit adaptée à une combustion dans une installation de chauffage urbain.

Il existe donc un besoin pour un procédé de traitement des déchets de bois de classe B en vue de les valoriser, de préférence en vue d'une combustion dans une chaudière industrielle ou en vue d'un recyclage comme matière première pour la fabrication de produits en bois recyclé ou en vue de les substituer au charbon dans les installations sidérurgiques.

L'invention concerne un procédé de traitement de déchets de bois de classe B, le procédé comportant les étapes successives de :
a) fourniture d'une charge comportant des particules de déchets de bois de classe B,
b) percussion de la charge avec au moins un corps percutant pour décaper les particules, et
c) criblage de la charge percutée.

Les inventeurs ont constaté qu'une partie de la charge, formée de particules de grande taille, voit sa teneur en certains polluants inorganiques, notamment métalliques, diminuer sous l'effet de la percussion. Le criblage permet ensuite de sélectionner avantageusement cette fraction qui présente ainsi des caractéristiques lui permettant tout au moins de s'approcher des contraintes normatives précitées pour sa valorisation, voire selon le cas de respecter ces contraintes.

Le décapage des particules sous l'effet de la percussion génère une fraction particulaire constituée de particules de faible taille, qui sont notamment des résidus de couches de vernis ou de peinture revêtant les particules et qui comportent généralement une teneur élevée en oxydes métalliques. Les polluants, en particulier inorganiques, sont ainsi majoritairement concentrés dans cette fraction particulaire.

La percussion des particules est différente d'un broyage. Elle permet d'enlever la couche de vernis ou de peinture de la surface du bois. Bien que la percussion puisse occasionnellement produire la rupture à coeur de quelques particules en morceaux, le nombre de particules d'une même classe de tailles n'est pas sensiblement modifié par l'étape de percussion. Avantageusement, le procédé selon l'invention permet ainsi de conserver substantiellement la forme et la taille initiale des particules de la charge. Il est ainsi possible de traiter une variété importante de gammes de tailles de plaquettes, contrairement à un procédé de broyage, dont l'objectif est d'éclater à coeur et en multiples morceaux toutes les particules de la charge.

De préférence, à l'étape a), les particules sont des plaquettes. Les plaquettes de bois sont définies dans la norme EN ISO 17225. De préférence, les plaquettes sont de type P45. Un tel format de plaquette est classiquement requis pour l'alimentation d'installations de combustion.

Le taux d'humidité de la charge à l'étape a) est de préférence inférieur à 20 %.

De préférence, à l'étape b), la percussion est opérée dans un tambour vibrant, par exemple équipé d'un moteur à balourd. La percussion est de préférence opérée pendant une durée comprise entre 30 min et 60 min, et notamment inférieure ou égale à 45 min.

La charge peut représenter entre 50 % et 60 % du volume du tambour.

La percussion est de préférence opérée dans une atmosphère réductrice ou neutre, par exemple sous azote, afin d'éviter l'inflammation de la charge. Une telle atmosphère comporte en masse moins de 1 % d'oxygène. Par ailleurs, la percussion peut être opérée à une température inférieure à 45 °C.

De préférence, la percussion est opérée au moyen de plusieurs, par exemple au moyen de plus de 100 corps percutants. Les corps percutant peuvent représenter entre 20 % et 25 % du volume du tambour vibrant.

De préférence, le corps percutant est un cylpebs. Un cylpebs est un corps plein, par exemple en un alliage ou une céramique, comportant une portion cylindrique prolongée à chaque extrémité longitudinale par un chapeau conique.

De préférence, le cylpebs présente une hauteur comprise entre 1 cm et 10 cm et un diamètre compris entre 1 cm et 10 cm. De telles dimensions permettent un décapage optimal tout en limitant le risque de broyage des particules.

En particulier, un cylpebs présentant une hauteur de 3 cm et un diamètre de 3 cm permet de réduire la durée de l'étape de percussion tout en décapant efficacement la surface des particules.

De préférence, en fin d'étape de percussion, moins de 30%, de préférence moins de 20 % de la surface des particules est recouverte d'un revêtement tel qu'une couche de vernis ou de peinture.

De préférence, le criblage est mis en oeuvre pour obtenir au moins trois fractions particulaires présentant des gammes de taille de particules différentes les unes des autres. Autrement dit, les fractions sont telles que pour chacune d'entre elles, la plus petite taille des particules d'une fraction est supérieure à la plus grande taille des particules d'une fraction formée de particules de taille inférieure.

Le criblage peut être mis en oeuvre au moyen d'un tamiseur circulaire.

De préférence, le criblage est mis en oeuvre pour obtenir une fraction particulaire grossière formée de particules refusées par un tamis à maille grossière dont la maille présente une taille comprise entre 10 mm et 45 mm, par exemple égale à 16 mm.

La fraction particulaire grossière présente des teneurs de certains polluants inorganiques plus faibles que la charge à l'étape a), qui peuvent avantageusement être inférieures aux teneurs maximales admissibles définies par la norme DEVP1405250A.

De préférence, le criblage est opéré pour obtenir une fraction particulaire fine formées de particules passant à travers un tamis à maille fine dont la maille présente une taille comprise entre 1 mm et 10 mm, par exemple égale à 3,15 mm.

En particulier, le criblage est opéré pour obtenir une fraction particulaire ultra-fine formée des particules de la fraction particulaire fine qui passent à travers un tamis à maille ultra-fine dont la maille présente une taille inférieure à 1 mm, de préférence inférieure ou égale à 0,9 mm, en particulier égale à 0,9 mm.

La fraction particulaire fine, et plus particulièrement la fraction particulaire ultra-fine, concentre majoritairement les polluants inorganiques et en particulier métalliques, qui ont été décapés à l'étape b). Avantageusement, elle peut être valorisée comme matière première pour le recyclage des matériaux métalliques après combustion/calcination et/ou pour la synthèse de catalyseurs, notamment lorsqu'elle présente une concentration en titane et/ou en aluminium adaptée. En particulier, notamment pour former des matières premières adapté à la synthèse d'un catalyseur, le procédé peut comporter une étape postérieure à l'étape c) consistant à calciner la fraction particulaire fine, de préférence la fraction particulaire ultra-fine, à une température supérieure à 150 °C, par exemple égale à 600 °C, et pendant au moins 0,5 heures, par exemple 4 heures. Le procédé peut comporter la production d'au moins un catalyseur métallique à partir de la fraction particulaire calcinée à l'étape c).

En variante, la fraction particulaire fine, et en particulier la fraction particulaire ultra-fine, peut être valorisée énergétiquement. Notamment, le procédé peut comporter la production de syngas par gazéification de la fraction particulaire fine, de préférence de la fraction particulaire ultra-fine. La gazéification est opérée par exemple au moyen d'un réacteur à flux entraîné ou d'un réacteur à lit fluidisé.

Par ailleurs, le criblage est de préférence opéré pour obtenir une fraction particulaire intermédiaire, passant à travers le tamis à maille grossière et refusée par le tamis à maille fine.

La fraction particulaire intermédiaire comporte des teneurs en certains polluants inorganiques, et notamment métalliques, plus faibles que dans la fraction fine et plus élevées que dans la fraction grossière, qui peuvent avantageusement être inférieures aux teneurs maximales admissibles définies par la norme EU 2009/894/EC.

Par ailleurs, postérieurement à l'étape c), le procédé comporte de préférence une étape d) de torréfaction d'au moins une partie de la charge percutée et criblée à une température comprise entre 200 °C et 300 °C.

De préférence, la température de torréfaction est en outre inférieure ou égale à 250 °C.

Les inventeurs ont constaté que la mise en oeuvre de l'étape d) permet d'abaisser encore la teneur en certains polluants, en particulier organiques, de la partie de la charge dont la teneur en polluants inorganiques a été réduite par l'étape de percussion. En particulier, ces polluants organiques peuvent être des composants organochlorés, par exemple du PCP et/ou du PCB, ou des hydrocarbures aromatiques polycycliques qui sont utilisés pour la préservation du bois. Par ailleurs, l'étape d) de thermo-conversion par torréfaction permet la réduction d'humidité contenue dans les déchets et assainit les déchets en détruisant les organismes biologiques qu'ils contiennent, ce qui facilite avantageusement le stockage à long terme de la fraction torréfiée.

Le taux d'humidité de la partie de la charge à torréfier à l'étape d) est inférieur à 50 %, de préférence inférieur à 20 %.

La torréfaction est de préférence opérée dans une atmosphère réductrice ou neutre, par exemple sous azote, afin d'éviter l'inflammation de la partie de la charge.

De préférence, la partie de la charge torréfiée à l'étape d) est la fraction particulaire grossière et/ou la fraction particulaire intermédiaire.

La torréfaction réduit les teneurs en polluants organiques dans la fraction particulaire grossière. Les teneurs en polluants organiques et en polluants inorganiques peuvent être inférieures aux teneurs maximales admissibles définies par la norme DEVP1405250A. Avantageusement, la fraction particulaire grossière torréfiée peut être valorisée comme combustible pour chaudière industrielle ou comme substitut au charbon de bois pour l'industrie sidérurgique.

La torréfaction réduit les teneurs en polluants organiques dans la fraction particulaire intermédiaire. Les teneurs en polluants organiques et en polluants inorganiques peuvent être inférieures aux teneurs maximales admissibles définies par la norme EU 2009/894/EC. La fraction particulaire intermédiaire peut avantageusement être valorisée comme matière première pour la production de meubles, notamment de panneaux hydrophobes.

Par ailleurs, le procédé peut comporter préalablement à l'étape a), le broyage des déchets de bois de classe B afin de former la charge de particules. La forme et la taille des particules étant sensiblement conservée après l'étape de percussion, il est ainsi possible de définir, préalablement à la mise en oeuvre du procédé selon l'invention, la taille des particules en fonction du domaine auquel elles sont destinées.

Par ailleurs, l'invention concerne l'utilisation de la fraction particulaire fine obtenue par le procédé selon l'invention pour la production de gaz synthétique ou pour la fabrication de catalyseur.

Elle concerne encore l'utilisation de la fraction particulaire intermédiaire obtenue par le procédé selon l'invention pour la fabrication de meubles, notamment de panneaux hydrophobes.

Elle concerne également l'utilisation de la fraction particulaire grossière obtenue par le procédé selon l'invention pour la fabrication d'agents réducteurs pour des hauts fourneaux métallurgiques. De tel agents réducteurs remplacent avantageusement le charbon fossile dans l'industrie métallurgique.

Elle concerne enfin l'utilisation de la fraction particulaire grossière obtenue par le procédé selon l'invention comme combustible dans une installation de chauffage industriel ou comme substitut au charbon dans une installation sidérurgique.

L'invention pourra être mieux comprise à la lecture de la description détaillée qui va suivre et du dessin annexé dans lequel :
[fig. 1] représente une installation pour la mise en oeuvre du procédé selon l'invention,
[fig. 2] contient des photographies de plaquettes P45 avant et après percussion selon un exemple de mise en oeuvre du procédé selon l'invention,
[fig. 3] contient des photographies de plaquettes P45 avant et après percussion selon un autre exemple de mise en oeuvre du procédé selon l'invention,
[fig. 4] est un graphique en camembert représentant, pour un exemple de mise en oeuvre du procédé, la répartition de différentes fractions particulaires dans la charge à l'étape a), et
[fig. 5] est un graphique en camembert représentant des fractions particulaires de la figure 4 après l'étape b) de percussion.

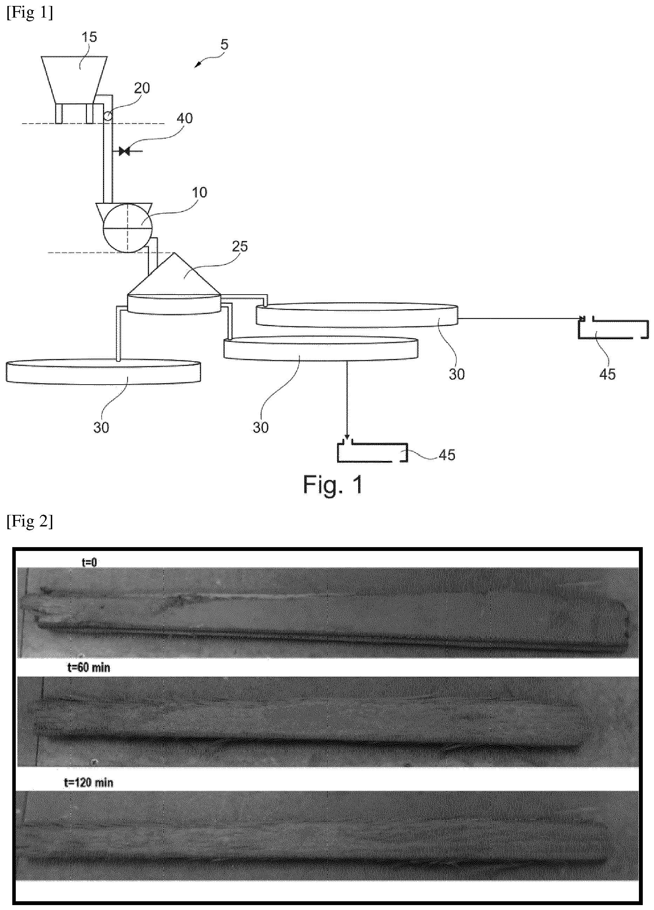

On a représenté sur la figure 1 un exemple de dispositif 5 pour la mise en oeuvre du procédé selon l'invention.

Il comporte un tambour vibrant 10, une trémie d'alimentation 15, un doseur 20, un tamiseur circulaire 25, et trois réservoirs 30.

Le tambour vibrant 10 est animé par un moteur à balourd opérant à une fréquence de 50 Hz. Il comporte une cuve contenant des cylpebs, qui représentent entre en 20 % et 25 % du volume de la cuve.

La trémie d'alimentation 15 est disposée en amont de la cuve 10 et est reliée au doseur 20 pour déverser des particules, par exemple des plaquettes de type P45, dans la cuve. Elle alimente la cuve avec un débit de particules par exemple d'environ 10 tonnes par heure.

Préalablement à l'introduction des particules dans la trémie d'alimentation, un tri préalable peut avantageusement être effectué pour éviter que du bois de classe C ne soit traité par le procédé.

Le dispositif 5 comporte par ailleurs un système d'injection d'azote 40 dans la cuve du tambour vibrant. Un balayage d'azote dans la cuve permet ainsi d'éviter l'inflammation de la charge. La percussion est opérée à une température inférieure à 45 °C pendant une durée comprise entre 30 min et 60 min.

Après percussion dans le tambour, les particules sont déversées dans le tamiseur circulaire 25 qui comporte un tamis ayant une maille grossière de 16 mm, un tamis à maille intermédiaire de 3,15 mm et un tamis à maille fine de 0,9 mm. Ces tamis sont superposés les uns sur les autres et de haut en bas en succession. Ainsi, particules qui sont refusées par le tamis à maille grossière et par le tamis à maille intermédiaire forment les fractions particulaire grossière et intermédiaire respectivement. Les particules passant au tamis à maille intermédiaire forment la fraction particulaire fine.

Le dispositif comporte en outre un four de torréfaction 45, par exemple à soles multiples, dans lequel les fractions particulaires intermédiaire et/ou grossière peuvent être traitées thermiquement à une température comprise entre 200 °C et 300 °C, de préférence à une température inférieure ou égale à 250 °C, sous une atmosphère d'azote. La durée de résidence dans le four de torréfaction est comprise entre 30 min et 60 min. Le four peut être alimenté par un débit massique de particules d'environ 10 tonnes par heure. Lorsque le taux d'humidité des particules pénétrant le four est supérieur à 20 %, la durée de résidence dans le four est préférentiellement de 60 minutes.

### Exemples

Trois sacs BB1, BB2 et BB3 contenant chacun entre 380 kg et 450 kg de déchets de bois de classe B ont été prélevés à différentes dates dans un gisement de 3000 tonnes de déchets. Ils ont été caractérisés selon la norme d'échantillonnage NF EN14778/ NF EN ISO 18135 de juin 2017.

Pour chacun des sacs, les teneurs en différents polluants ont été déterminées avant la mise en oeuvre du procédé, après percussion et après torréfaction. Les échantillons ont été broyés et homogénéisés puis analysés par un laboratoire certifié par une accréditation COFRAC. Les polluants suivants ont été analysés par des méthodes respectant les normes suivantes:
- Aluminium: ICP/AES-NF EN ISO 16967
- Calcium: ICP/AES-NF EN ISO 16967
- Fer: ICP/AES-NF EN ISO 16967
- Magnésium: ICP/AES-NF EN ISO 16967
- Phosphore: ICP/AES-NF EN ISO 16967
- Potassium: ICP/AES-NF EN ISO 16967
- Sodium: ICP/AES-NF EN ISO 16967
- Titane: ICP/AES-NF EN ISO 16967
- Baryum: ICP/MS-NF EN ISO 16968
- Bore: ICP/MS-NF EN ISO 16968
- Cadmium: ICP/MS-NF EN ISO 16968
- Chrome total: ICP/MS-NF EN ISO 16968
- Cuivre: ICP/MS-NF EN ISO 16968
- Etain: ICP/MS-NF EN ISO 16968
- Nickel: ICP/MS-NF EN ISO 16968
- Plomb: ICP/MS-NF EN ISO 16968
- Zinc: ICP/MS-NF EN ISO 16968
- Arsenic: ICP/MS-NF EN ISO 16968
- Manganèse: ICP/AES-NF EN ISO 16967
- Silicium: ICP/AES-NF EN ISO 16968
- Mercure: SAA chlorure stanneux-NF EN ISO 16968
- PCP: GC/ECD-NF B 51-297
- PCB: GC/MS-NF EN 15308
- HAP: GC/MS- NF EN 15527

Selon un premier exemple, la percussion de charges issues des sacs BB 1 à BB3 a été réalisée au moyen de cylpebs présentant une hauteur de 2 mm et un diamètre de 2 mm. La figure 2 présente des photographies de plaquettes de type P45 après différentes durées de percussion. Selon ce premier exemple, 70 % à 80 % de la couche de peinture présente sur les plaquettes a été décapée après 60 minutes de percussion. 90 % de ladite couche a été décapée après 120 minutes de percussion.

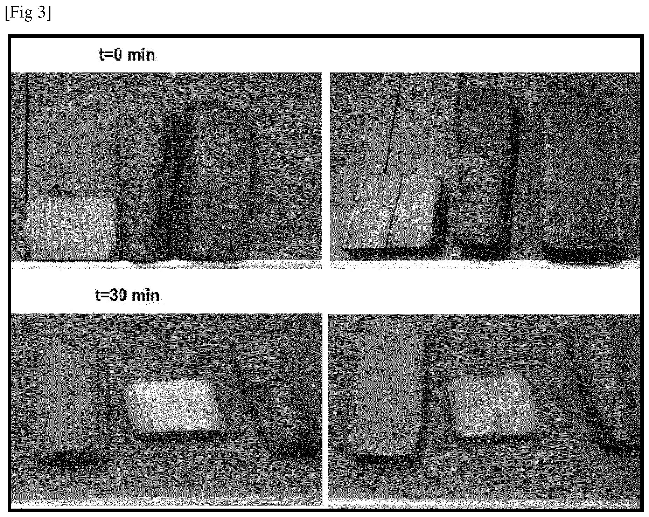

Selon un deuxième exemple, la percussion de charges issues des sacs BB 1 à BB3 a été réalisée au moyen de cylpebs présentant une hauteur de 3 mm et un diamètre de 3 mm. Entre 80 % et 90 % de la couche de peinture présente sur les plaquettes a été après 30 minutes de percussion, comme cela est illustré sur la figure 3.

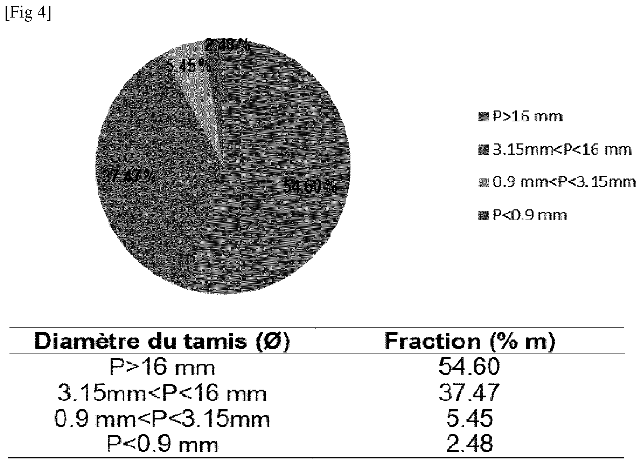

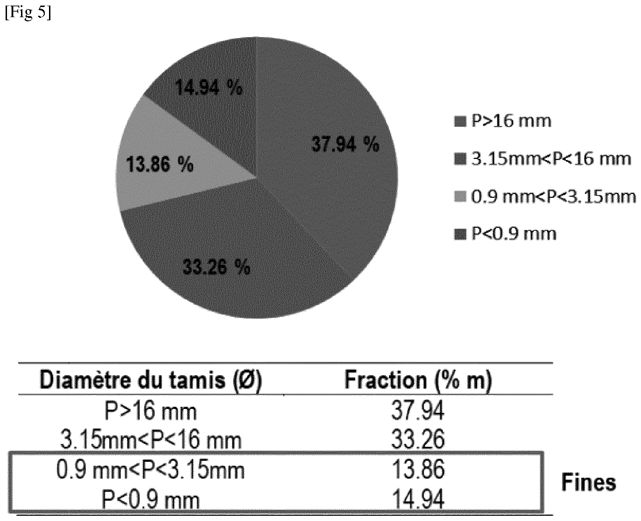

Par ailleurs, préalablement à et après la percussion dans le tambour vibrant, la charge a été criblée au moyen des tamis à maille grossière, intermédiaire et fine. Les figures 4 et 5 illustrent les distributions massiques de chaque fraction, exprimées en pourcentages de la masse de la charge.

L'étape de percussion résulte en une augmentation de la proportion, en pourcentages massique, de particules dans la fraction particulaire fine, c'est-à-dire passant à travers le tamis à maille intermédiaire de 3,15 mm. Pour autant, le nombre de particules de chacune des fractions particulaires grossière et intermédiaire est sensiblement constant.

Après percussion, les fractions particulaires intermédiaire et grossière représentent ainsi 71,2 % de la masse de la charge.

Les tableaux 1 à 3 indiquent pour les échantillons provenant des sacs BB 1 à BB3 les teneurs en polluants avant et après percussion.

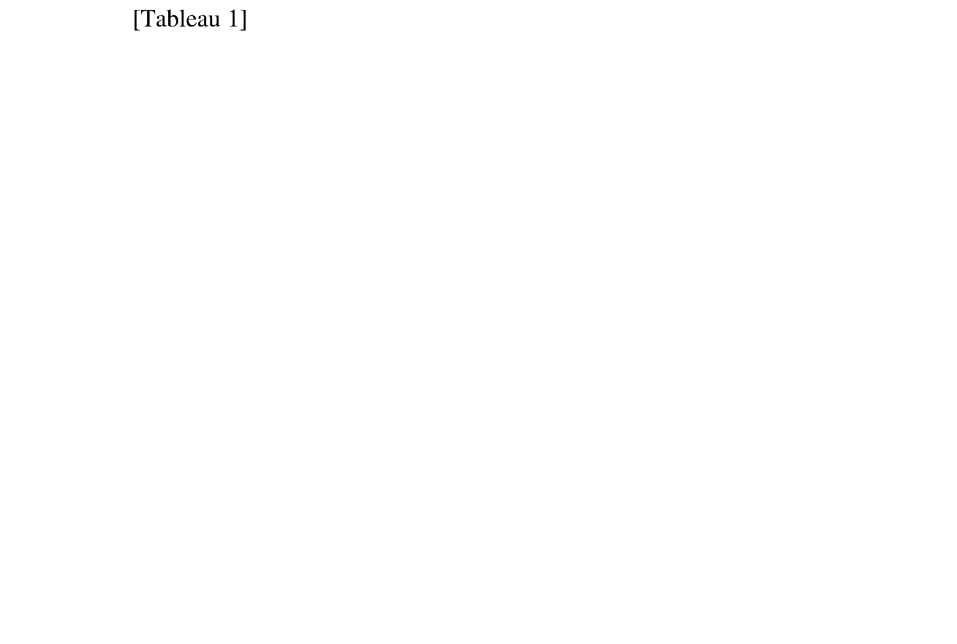

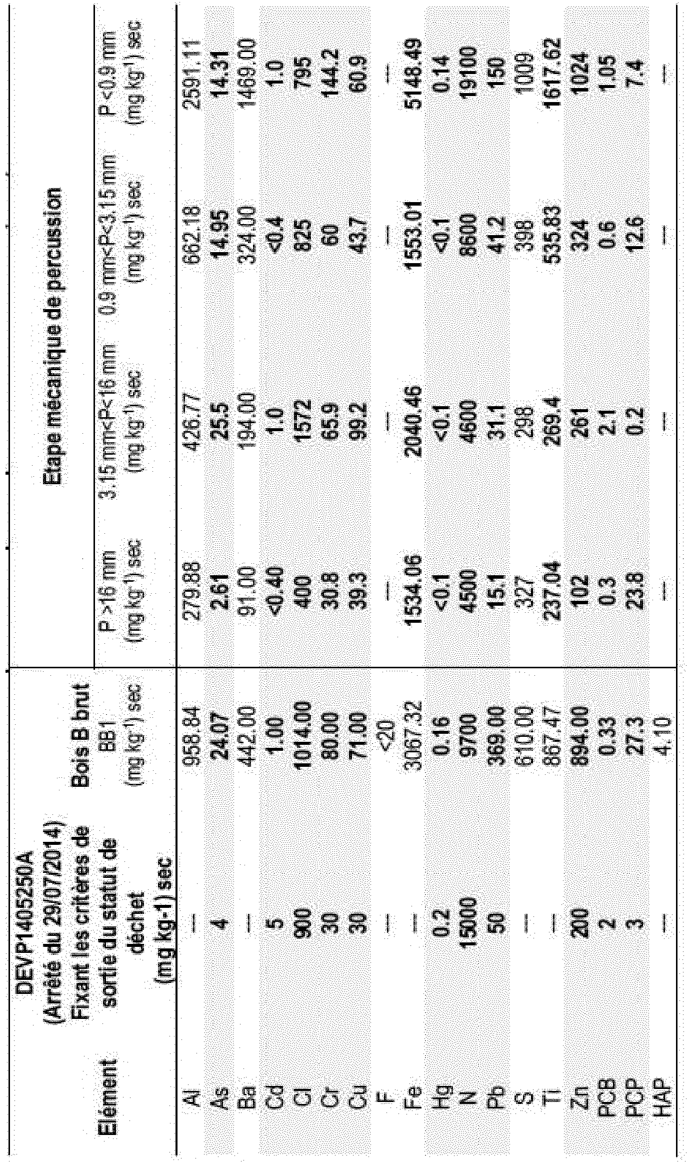

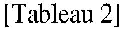

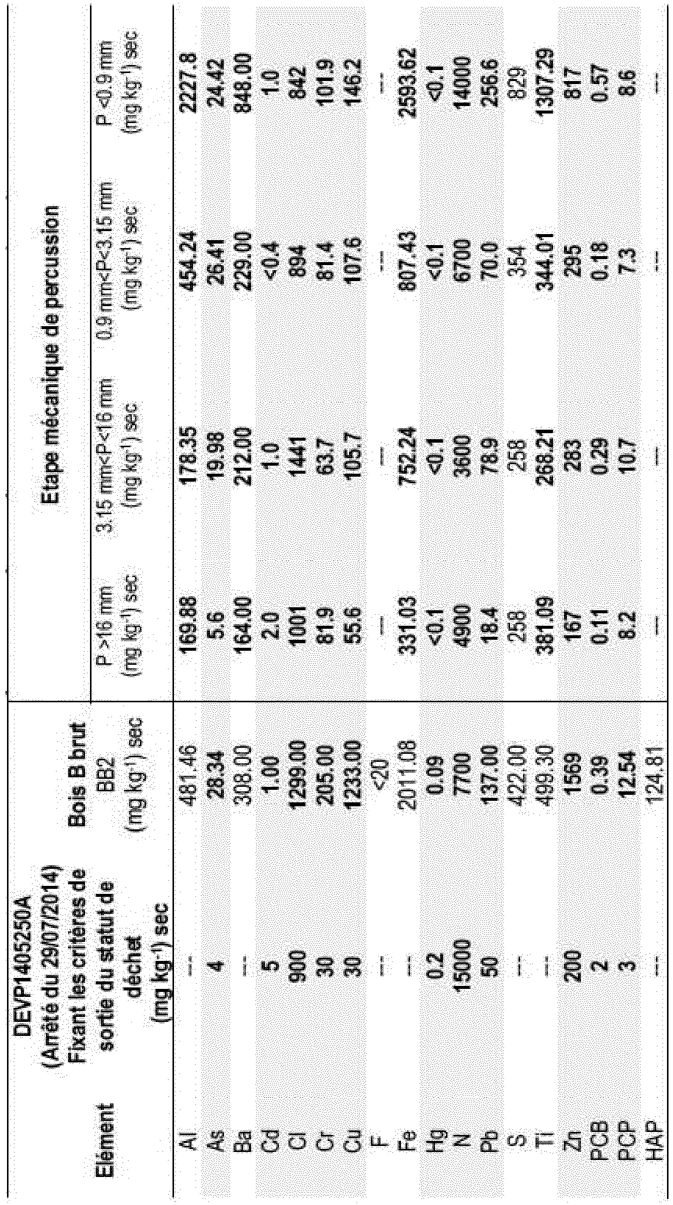

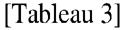

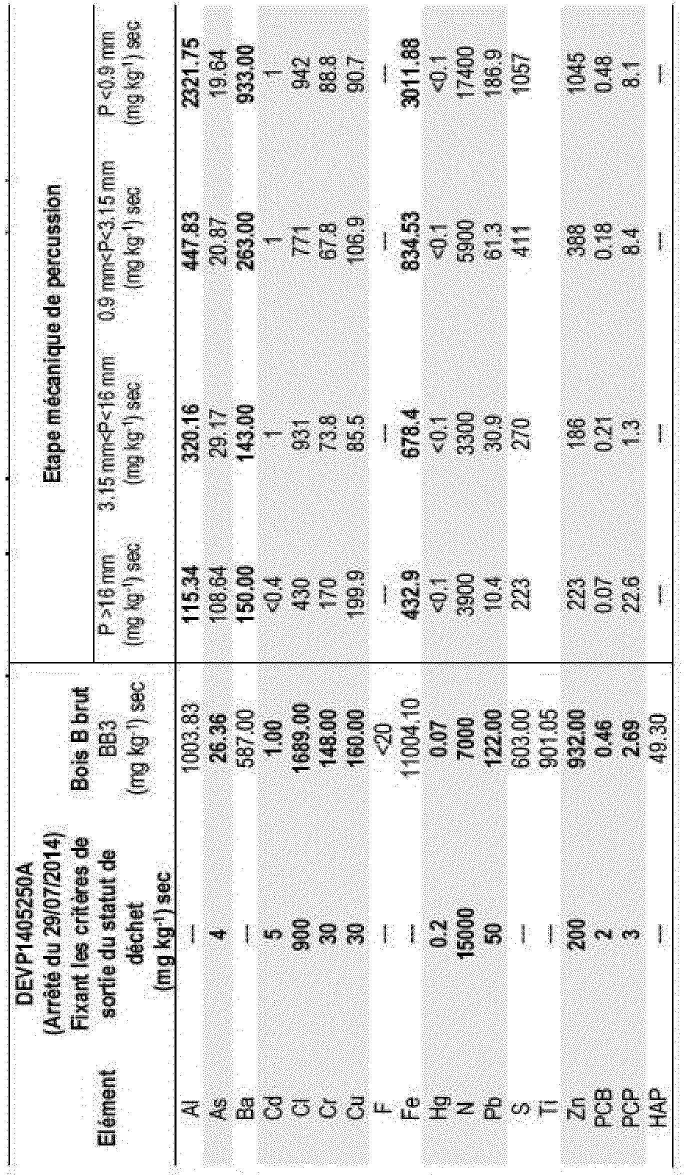

Pour tous les échantillons, la concentration en métaux est supérieure dans la fraction particulaire fine ( P < 3,15 mm), qui regroupe la fraction des particules d'une taille inférieur à 0,9 mm ( P < 0,9 mm) et la fraction des particules d'une taille comprise entre 0,9 mm et 3,15 mm (0,9 mm <P < 3,15 mm). La fraction particulaire grossière ( P > 16 mm) présente des concentrations en polluants métalliques inférieures aux fractions particulaire intermédiaire et fine.

Plus particulièrement :
- les concentrations en Ti, Al, Fe et Ba présents dans les peintures et revêtements du bois, suivent la même tendance dans les quatre fractions de bois tamisées. Les concentrations de ces métaux dans la fraction des particules très fines (P< 0.9 mm) sont au moins 5 fois supérieures à celles de la fraction la plus grossière (P> 16 mm).
- la teneur en plomb de la fraction particulaire grossière (P> 16 mm) a été réduite d'un facteur supérieur à 10 par la percussion.
- la teneur en zinc de la fraction particulaire grossière (P> 16 mm) a été réduite d'un facteur supérieur à 7 par la percussion.
- la teneur totale Ti +A1 + Fe + Ba de la fraction particulaire grossière (P> 16 mm) a été réduite d'un facteur supérieur à 3 par la percussion, ce qui est avantageux pour améliorer la gestion des cendres durant la combustion.

Des fractions particulaires grossières (P> 16 mm) provenant du sac BB 1 ont ensuite été torréfiées à 250 °C et à 280 °C, pendant une durée de résidence dans le four de torréfaction comprise entre 30 min et 60 min.

Le rendement de thermo-conversion, correspondant au rapport, exprimé en pourcentage, de la perte de masse du matériau au cours de la torréfaction sur la masse de matériau avant torréfaction, est compris entre 20 % et 25 % pour une température de torréfaction de 250 °C et compris entre 40 % et 42 % pour une température de torréfaction de 280 °C.

Des fractions particulaires grossières (P> 16 mm) provenant des sacs BB2 et BB3 ont été torréfiées à 250 °C, pendant une durée de résidence dans le four de torréfaction comprise entre 30 min et 60 min.

Les tableaux 4 à 6 présentent les analyses des teneurs en polluants de ces fractions après torréfaction.

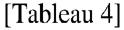

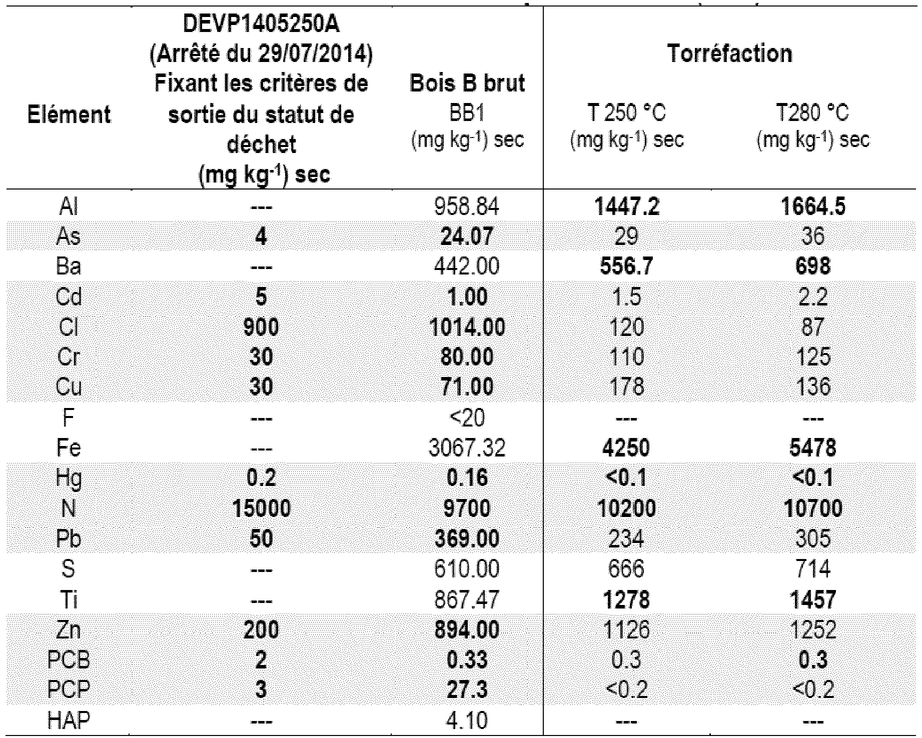

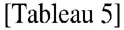

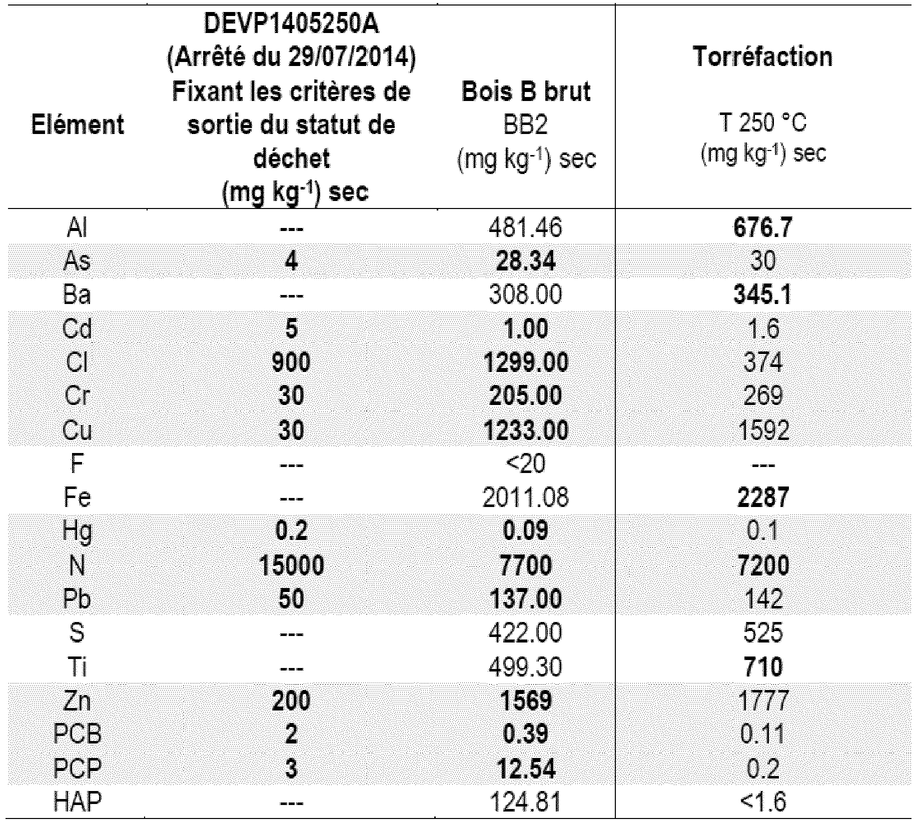

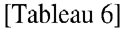

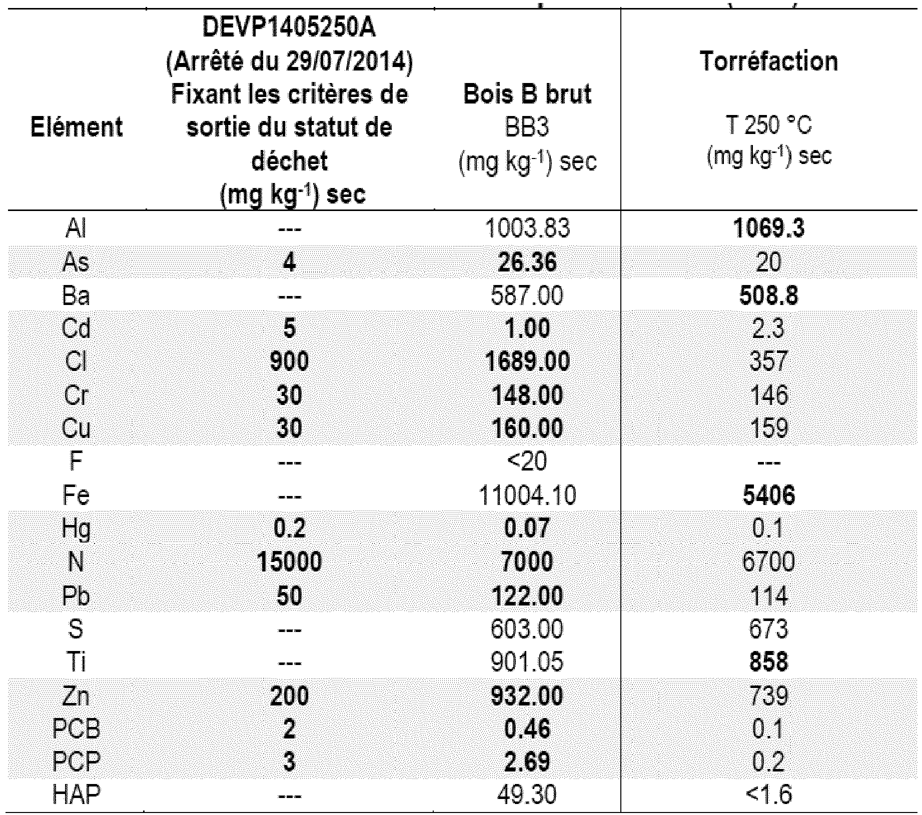

La torréfaction induit une diminution des teneurs de certains composants, en particulier organiques, qui volatilisent, tels que les organochlorés (PCP et PCB), le chlore total, et les hydrocarbures aromatiques polycycliques (HAP).

Par exemple, pour les échantillons provenant du sac BB 1, les teneurs en chlore et en PCP de la fraction particulaire grossière (P> 16 mm) ont été réduites d'un facteur supérieur à 10 par la torréfaction. Pour les échantillons provenant des sacs BB2 et BB3, la teneur en HAP a été réduite d'un facteur supérieur à 30 par la torréfaction.

Avantageusement, la torréfaction à 250 °C est particulièrement efficace pour réduire la concentration totale du chlore, PCP et HAP, dont les teneurs sont inférieures aux valeurs maximales définies par la norme DEVP1405250A.

En outre, les teneurs en azote, mercure, cadmium et PCB sont inférieures à la norme après la percussion ainsi qu'après la torréfaction.

La torréfaction seule a peu d'impact significatif sur l'élimination de certains métaux et métalloïdes tels que Ti, Al, Fe, Ba, Pb, Cd, Zn, Cr, Cu et As. La teneur de ces métaux augmente légèrement en raison de la perte de masse.

Ainsi, il apparait directement à la lecture des exemples que la combinaison d'un traitement mécanique par percussion et d'un traitement thermique par torréfaction permet de réduire la teneur en métaux tels que le plomb et le zinc et en composés organochlorés dans les déchets de bois de classe B à des valeurs admissibles au regard de la norme DEVP1405250A.

Bien évidemment l'invention n'est pas limitée aux modes de mises en oeuvre décrits à titre illustratifs et non limitatifs. Par exemple, d'autres corps de broyage que des cylpebs peuvent être utilisés pour percuter les particules de déchets de bois de classe B.

## Revendications

1. Procédé de traitement de déchets de bois de classe B, le procédé comportant les étapes successives de :
a) fourniture d'une charge comportant des particules de déchets de bois de classe B,
b) percussion de la charge avec au moins un corps percutant pour décaper les particules, et
c) criblage de la charge percutée.

2. Procédé selon la revendication 1, comportant postérieurement à l'étape c) une étape d) de torréfaction d'au moins une partie de la charge percutée et criblée à une température comprise entre 200 °C et 300 °C, et de préférence inférieure ou égale à 250 °C.

3. Procédé selon l'une quelconque des revendications 1 et 2, le criblage étant mis en oeuvre pour obtenir au moins trois fractions particulaires présentant des gammes de taille de particules différentes les unes des autres.

4. Procédé selon l'une quelconque des revendications précédentes, le criblage étant mis en oeuvre pour obtenir une fraction particulaire grossière formée de particules refusées par un tamis à maille grossière dont la maille présente une taille comprise entre 10 mm et 45 mm, par exemple égale à 16 mm.

5. Procédé selon l'une quelconque des revendications précédentes, le criblage étant opéré pour obtenir une fraction particulaire fine formées de particules passant à travers un tamis à maille fine dont la maille présente une taille comprise entre 1 mm et 10 mm, par exemple égale à 3,15 mm.

6. Procédé selon la revendication précédente, le criblage étant opéré pour obtenir une fraction particulaire ultra-fine formée des particules de la fraction particulaire fine qui passent à travers un tamis à maille ultra-fine dont la maille présente une taille inférieure à 1 mm, de préférence inférieure ou égale à 0,9 mm, en particulier égale à 0,9 mm.

7. Procédé selon l'une quelconque des revendications 4 à 6, le criblage étant opéré pour obtenir une fraction particulaire intermédiaire, passant à travers le tamis à maille grossière et refusée par le tamis à maille fine.

8. Procédé selon l'une quelconque des revendications précédentes, selon lequel à l'étape a), les particules de déchet de bois de classe B sont des plaquettes, de préférence de type P45.

9. Procédé selon l'une quelconque des revendications précédentes, selon lequel à l'étape b), la percussion est opérée dans un tambour vibrant, de préférence pendant une durée comprise entre 30 et 60 min.

10. Procédé selon l'une quelconque des revendications précédentes, l'objet percutant étant un cylpebs, de préférence présentant une hauteur comprise entre 1 cm et 10 cm et un diamètre compris entre 1 cm et 10 cm.

11. Procédé selon l'une quelconque des revendications 2 à 10, la torréfaction étant opérée dans un four de torréfaction à soles multiples.

12. Procédé selon l'une quelconque des revendications 2 à 10 prise en dépendance avec la revendication 4 et/ou la revendication 7, la partie de la charge torréfiée à l'étape d) étant la fraction particulaire grossière et/ou la fraction particulaire intermédiaire.

13. Procédé selon l'une quelconque des revendications 5 à 11, le procédé comportant une étape postérieure à l'étape c) consistant à calciner la fraction particulaire fine, de préférence la fraction particulaire ultra-fine, à une température supérieure à 150 °C, par exemple égale à 600 °C, et pendant au moins 0,5 heures, par exemple 4 heures, le procédé comportant de préférence la production d'au moins un catalyseur métallique à partir de la fraction particulaire calcinée à l'étape c).

14. Procédé selon l'une quelconque des revendications 5 à 11, comportant la production de syngas par gazéification de la fraction particulaire fine, de préférence de la fraction particulaire ultra-fine.

15. Utilisation de la fraction particulaire grossière obtenue par le procédé selon la revendication 4 ou l'une quelconque des revendications 5 à 14 prise en dépendance avec la revendication 4, pour la fabrication d'agents réducteurs pour des hauts fourneaux métallurgiques.

## Patentansprüche

1. Verfahren zur Behandlung von Holzabfällen der Klasse B, wobei das Verfahren die folgenden aufeinander folgenden Schritte umfasst:
a) Bereitstellen einer Charge, die Partikel von Holzabfällen der Klasse B umfasst,
b) Zerschlagen der Charge mit mindestens einem Schlagkörper, um die Partikel abzubeizen, und
c) Sieben der zerschlagenen Charge.

2. Verfahren nach Anspruch 1, umfassend nach dem Schritt c) einen Schritt d) des Torrefizierens mindestens eines Teils der zerschlagenen und gesiebten Charge bei einer Temperatur zwischen 200 °C und 300 °C und bevorzugt weniger als oder gleich 250 °C.

3. Verfahren nach einem der Ansprüche 1 und 2, wobei das Sieben ausgeführt wird, um mindestens drei Partikelfraktionen zu erhalten, die voneinander verschiedene Partikelgrößenbereiche aufweisen.

4. Verfahren nach einem der vorhergehenden Ansprüche, wobei das Sieben ausgeführt wird, um eine grobe Partikelfraktion zu erhalten, die aus Partikeln gebildet wird, die von einem grobmaschigen Sieb zurückgehalten werden, dessen Masche eine Größe zwischen 10 mm und 45 mm aufweist, beispielsweise von 16 mm.

5. Verfahren nach einem der vorhergehenden Ansprüche, wobei das Sieben durchgeführt wird, um eine feine Partikelfraktion zu erhalten, die aus Partikeln gebildet wird, die ein feinmaschiges Sieb passieren, dessen Masche eine Größe zwischen 1 mm und 10 mm aufweist, beispielsweise von 3,15 mm.

6. Verfahren nach dem vorhergehenden Anspruch, wobei das Sieben durchgeführt wird, um eine ultrafeine Partikelfraktion zu erhalten, die aus Partikeln der feinen Partikelfraktion gebildet wird, die ein ultrafeinmaschiges Sieb passieren, dessen Masche eine Größe von weniger als 1 mm, bevorzugt weniger als oder gleich 0,9 mm, insbesondere von 0,9 mm aufweist.

7. Verfahren nach einem der Ansprüche 4 bis 6, wobei das Sieben durchgeführt wird, um eine mittlere Partikelfraktion zu erhalten, die das grobmaschige Sieb passiert und von dem feinmaschigen Sieb zurückgehalten wird.

8. Verfahren nach einem der vorhergehenden Ansprüche, gemäß dem im Schritt a) die Partikel von Holzabfällen der Klasse B Hackschnitzel sind, bevorzugt vom Typ P45.

9. Verfahren nach einem der vorhergehenden Ansprüche, gemäß dem im Schritt b) das Zerschlagen in einer Rütteltrommel durchgeführt wird, bevorzugt während einer Dauer zwischen 30 und 60 min.

10. Verfahren nach einem der vorhergehenden Ansprüche, wobei der Schlaggegenstand ein Cylpebs ist, der bevorzugt eine Höhe zwischen 1 cm und 10 cm und einen Durchmesser zwischen 1 cm und 10 cm aufweist.

11. Verfahren nach einem der Ansprüche 2 bis 10, wobei das Torrefizieren in einem Mehretagen-Torrefizierungsofen durchgeführt wird.

12. Verfahren nach einem der Ansprüche 2 bis 10 in Abhängigkeit von Anspruch 4 und/oder Anspruch 7, wobei der Teil der torrefizierten Charge im Schritt d) die grobe Partikelfraktion und/oder die mittlere Partikelfraktion ist.

13. Verfahren nach einem der Ansprüche 5 bis 11, wobei das Verfahren einen Schritt nach dem Schritt c) umfasst, der darin besteht, die feine Partikelfraktion, bevorzugt die ultrafeine Partikelfraktion, bei einer Temperatur von mehr als 150 °C, beispielsweise von 600 °C, und während mindestens 0,5 Stunden, beispielsweise 4 Stunden, zu kalzinieren, wobei das Verfahren bevorzugt die Erzeugung mindestens eines metallischen Katalysators ausgehend von der im Schritt c) kalzinierten Partikelfraktion umfasst.

14. Verfahren nach einem der Ansprüche 5 bis 11, umfassend die Erzeugung von Syngas durch Vergasen der feinen Partikelfraktion, bevorzugt der ultrafeinen Partikelfraktion.

15. Verwendung der mit dem Verfahren nach Anspruch 4 oder einem der Ansprüche 5 bis 14 in Abhängigkeit von Anspruch 4 erhaltenen groben Partikelfraktion zur Herstellung von Reduktionsmitteln für metallurgische Hochöfen.

## Claims

1. Method for processing class B wood waste, the method comprising the successive steps of:
a) supplying a load comprising particles of class B wood waste,
b) striking the load with at least one striking body to scrape the particles, and
c) screening the struck load.

2. Method according to Claim 1, comprising, after step c) , a step d) of roasting at least a part of the struck and screened load at a temperature lying between 200°C and 300°C, and preferably less than or equal to 250°C.

3. Method according to either of Claims 1 and 2, the screening being implemented to obtain at least three particulate fractions having particle size ranges that are different from one another.

4. Method according to any of the preceding claims, the screening being implemented to obtain a rough particulate fraction formed by particles rejected by a screen with rough mesh, the mesh of which has a size lying between 10 mm and 45 mm, for example equal to 16 mm.

5. Method according to any of the preceding claims, the screening being applied to obtain a fine particulate fraction formed by particles passing through a screen with fine mesh, the mesh of which has a size lying between 1 mm and 10 mm, for example equal to 3.15 mm.

6. Method according to the preceding claim, the screening being applied to obtain an ultra-fine particulate fraction formed by particles of the fine particulate fraction which pass through a screen with ultra-fine mesh, the mesh of which has a size less than 1 mm, preferably less than or equal to 0.9 mm, in particular equal to 0.9 mm.

7. Method according to any of Claims 4 to 6, the screening being applied to obtain an intermediate particulate fraction, passing through the screen with rough mesh and rejected by the screen with fine mesh.

8. Method according to any of the preceding claims, according to which, in step a), the particles of class B wood waste are platelets, preferably of P45 type.

9. Method according to any of the preceding claims, according to which, in step b), the striking is applied in a vibrating drum, preferably for a duration lying between 30 and 60 min.

10. Method according to any of the preceding claims, the striking object being a cylpebs, preferably having a height lying between 1 cm and 10 cm and a diameter lying between 1 cm and 10 cm.

11. Method according to any of Claims 2 to 10, the roasting being applied in a multiple-bed roasting oven.

12. Method according to any of Claims 2 to 10 in dependency with Claim 4 and/or Claim 7, the part of the load roasted in step d) being the rough particulate fraction and/or the intermediate particulate fraction.

13. Method according to any of Claims 5 to 11, the method comprising a step after step c) consisting in burning the fine particulate fraction, preferably the ultra-fine particulate fraction, at a temperature greater than 150°C, for example equal to 600°C, and for at least 0.5 hour, preferably 4 hours, the method preferably comprising the production of at least one metal catalyst from the particulate fraction burnt in step c).

14. Method according to any of Claims 5 to 11, comprising the production of syngas by gasification of the fine particulate fraction, preferably of the ultra-fine particulate fraction.

15. Use of the rough particulate fraction obtained by the method according to Claim 4 or any of Claims 5 to 14 in dependency with Claim 4, for the production of reducing agents for high metallurgical furnaces.
